# EUROPEAN PATENT SPECIFICATION

(11) **EP 3 354 966 B1**
(45) Date of publication and mention of the grant of the patent: **11.03.2020**
(21) Application number: 17154061.0
(22) Date of filing: 31.01.2017
(51) Int. Cl.: F21S 41/657, B60Q 1/00, B60Q 1/12, F21S 41/675

(54) **LIGHTING SYSTEM FOR VEHICLES PROVIDED WITH ROTATING MODULES**
BELEUCHTUNGSSYSTEM FÜR FAHRZEUGE MIT ROTIERENDEN MODULEN
SYSTÈME D'ÉCLAIRAGE POUR VÉHICULES POURVUS DE MODULES ROTATIFS

(43) Date of publication of application: 01.08.2018
(73) Proprietor: Marelli Automotive Lighting Italy S.p.A., 10078 Venaria Reale (TO) (IT); PSA Automobiles SA, 78300 Poissy (FR)
(72) Inventor: RODRIGUEZ ORTEGA, Pablo, 10078 VENARIA REALE (IT); RENARD, Stephanie, 10078 VENARIA REALE (IT); ZATTONI, Sergio, 10078 VENARIA REALE (IT); GONCALVES, Whilk Marcelino, 78140 VELIZY VILLACOUBLAY (FR); LE DALL, Christophe, 78140 VELIZY VILLACOUBLAY (FR); BORE, Michael, 78140 VELIZY VILLACOUBLAY (FR); STEE, Lucien, 78140 VELIZY VILLACOUBLAY (FR)
(74) Representative: Plebani, Rinaldo

(56) References cited:
- EP-A1- 1 772 666
- WO-A1-2014/008523
- DE-A1-102008 028 797
- FR-A1- 3 029 601
- US-A1- 2008 266 890

## Description

### Technical field of the invention

The present invention relates to a lighting system for vehicles, consisting in a pair of complementary lighting devices, each equipped with a main lighting module, and with a plurality (i.e. at least two) of secondary lighting modules having rotation capabilities in order to provide selectively a plurality of lighting distributions by means of the same lighting system.

### Technical Background

Lighting systems for vehicles based on a pair of complementary lighting devices provided with rotating elements, like a rotating reflector, are known in the art.

US4868721 discloses a lighting module comprising a light source and at least one reflector, wherein the reflector is motorized and is designed to intercept a concentrated unidirectional pencil of light produced by the light source, which is fixed with respect to the reflector, causing, due to its rotation around a fixed axis, a continuous rapid scanning of the pencil of light within a predetermined solid angle.

EP2902701 discloses a device of the kind of that of US4868721, but wherein the light source is a LED and the reflector consists of a rotating support having two opposite faces, one constituting the reflector and the other realizing a second function, e.g. an aspect function; a fixed motor rotates the support with respect to the fixed light source in order to bring selectively the two faces on the front side of the device facing toward the direction of motion of the vehicle.

The lighting device according to US4868721 is generally expensive to be produced and may be of complex operation; moreover it may be incapable to meet the modern lighting requirements which imply the capacity of the lighting device to be adaptive to different running situations of the vehicle, e.g. to follow a turn when the driving wheel is rotated and/or to raise or lower the light beam emitted by the device e.g. during a country run or a city run.

EP2902701 may generate only two different main light functions, each by means of one of the two reflective surfaces of the support. DE 10 2008 028797 A1 discloses a lighting system of the prior art.

### Summary of the invention

The object of the present invention is to provide a lighting system for vehicles consisting in a pair of complementary lighting devices each comprising at least a rotating lighting module, able to carry out a plurality of lighting function though being of simple and compact construction, cost-effective and highly reliable.

According to the invention, therefore, a lighting system for vehicles is provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a perspective view of a lighting system for vehicles according to the invention seen from the front, i.e. from the side facing the forward driving direction of the vehicle, and, still schematically, a light distribution (as it appears on the standard test screen at 25 m) generated thereby;
- figures 2, 3, 4, 5, 6 show schematically further different light distributions (as they appear on the standard test screen at 25 m) which can be generated by the lighting system of figure 1; and
- figure 7 shows schematically a side elevation view of one rotating module of the lighting system of figure 1.

### Detailed description

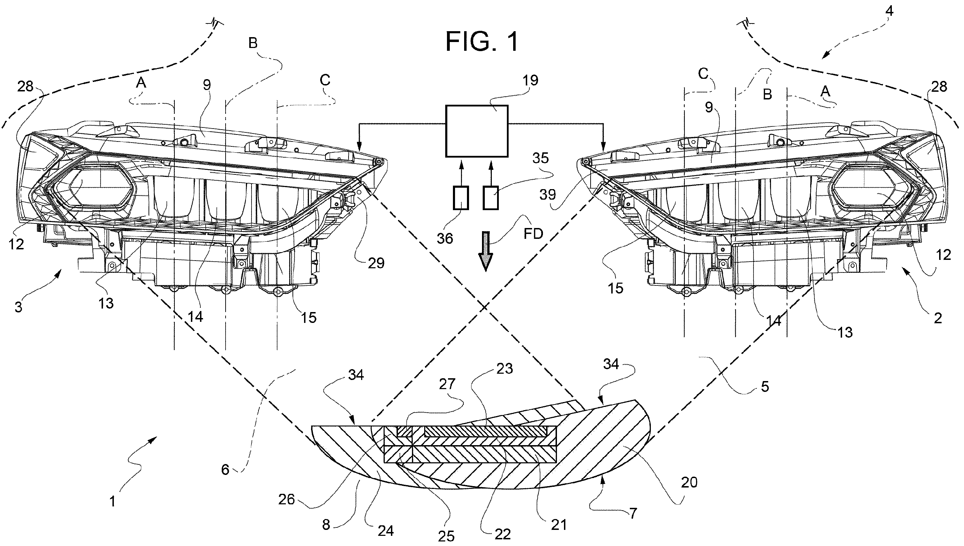

With reference to figure 1, reference number 1 indicates as a whole a lighting system for vehicles comprising a pair of complementary lighting devices 2,3, in the non-limiting embodiment shown, a pair of complementary vehicle headlight assemblies 2,3, which are only schematically shown from the front, with parts, which are not essential for describing the invention, removed for sake of simplicity.

The lighting devices 2,3 are designed to be assembled on a vehicle 4 (shown only schematically and only in part with dashed lines) on the right outboard side and on the left outboard side respectively, in the example shown on the front of the vehicle 4, facing the forward driving direction FD of the vehicle 4, indicated by an arrow in figure 1.

The lighting devices 2,3 are complementary, which means that, as far as the present invention is concerned, they are able to generate forward light beams 5,6 which partially cross each other so as to generate on a standard test screen placed in front of the lighting system 1, when the lighting devices 2,3 are switched on, respective overall light projections 7,8 which are partially superimposed in horizontal direction, as it is clearly shown in figure 1, where projections 7,8 are shown as a whole as differently hatched areas: overall light projection 7 is formed on the test screen by light beam 5 generated by lighting device 2, while overall light projection 8 is formed on the test screen by light beam 6 generated by lighting device 3.

Each lighting device 2,3 comprises a generally cup-shaped housing body 9, shown only in part in figure 1, which housing body 9 is designed to be mounted on vehicle 1 in a known manner. Housing bodies 2 of both devices 2,3 are made of synthetic plastic material by injection molding and have each a front inlet opening 10 in use facing opposite to the vehicle and toward the forward driving direction FD of the vehicle 1; the front inlet openings 10 are closed by respective transparent covers, normally constituted by a terse lens (i.e. a transparent lens not provided with optical functions), known and not shown for sake of simplicity.

According to one aspect of the present invention, each housing body 9 carries at the interior thereof at least one main lighting module 12 and at least two, and preferably three or more, in the embodiment shown three, secondary (or auxiliary) lighting modules 13, 14 and 15, arranged side by side to one another and on the same side of the main lighting module 12: all the modules 13-15 may be visible from the outside through the transparent cover closing the inlet openings 10.

The housing bodies 9 are designed to be mounted in a known manner on vehicle 1 with the front inlet opening 10 arranged to face in use toward the forward driving direction FD; the main lighting module 12 and the at least two (three in the embodiment shown) secondary lighting modules 13,14,15 are arranged inside the housing body 9 facing the inlet opening.

The main lighting module 12 of each lighting device 2,3 is carried in a fixed manner within the respective housing body 9, rigid and stationary thereby, while the secondary lighting modules 13,14,15 are carried within the housing body 9 of the respective lighting device 2,3 rotatable in relation to the housing body 9 itself and to the respective main lighting module 12, each around a respective its own first axis, each indicated in figure 1 with a different reference letter "A", "B" and "C".

The first axes A,B,C of the secondary lighting modules 13,14,15 are arranged parallel to each other and transverse to an horizontal plane crossing transversally the lighting devices 2,3 and containing the optical axes of the lighting devices 12-15, i.e. the axes along which their generated light beams 5,6 travels forward.

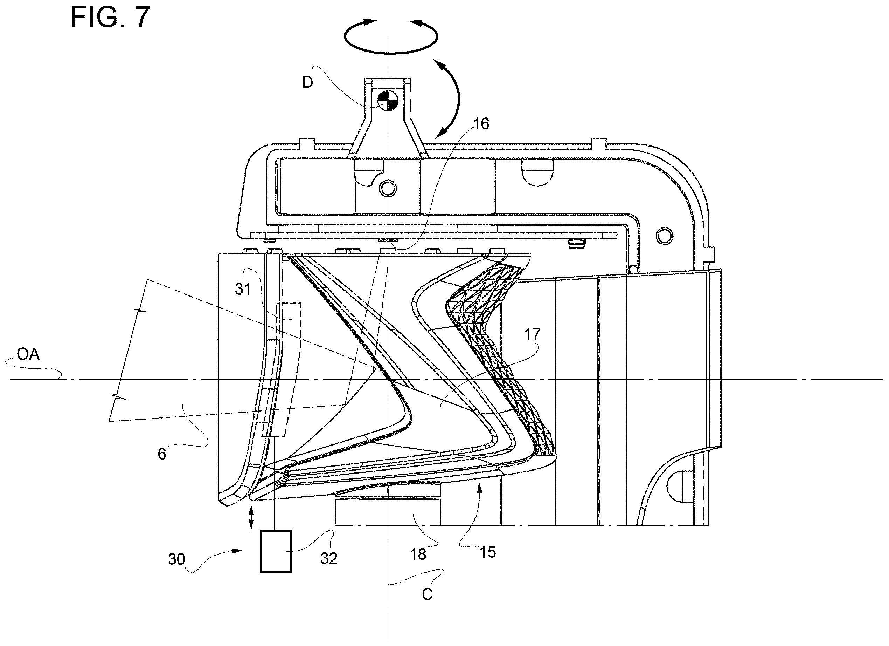

For sake of simplicity, in figure 7 is shown in more details and in an enlarged scale one lighting module only, namely lighting module 15, having an optical axis OA along which the light beam (indicated as 6c in figure 7) generated thereby travels forward.

All the rotating lighting modules 13,14,15 of both the lighting devices 2,3 have an identical structure and comprise, each, (as it is described in greater details in the parallel patent application EP16200369.3 filed on November 23, 2016 in the name of the same applicants and the whole content of which is incorporated herein by reference) at least one first light source 16, at least one first reflector 17 and at least one first actuator 18 to rotate the reflector 17 of each module 13,14,15 relative to the respective light source 16 around the first axis A, B, C (axis C in figure 7) of each module.

The pair of lighting devices 2,3 are designed to be mounted at opposite outboard front sides of vehicle 4; the pair of lighting devices 2,3 are moreover configured to generate on a test screen placed in front of the lighting system 1, when they are switched on, the overall light projections 7,8 which partially overlap in an horizontal direction, as already described; the lighting system 1 further comprising a control unit 19 (figure 1) to switch on/off selectively the main lighting module 12 and the secondary lighting modules 13-15 of each lighting device 2,3.

According to one of the main features of the present invention, the at least two (three in the embodiment shown) secondary lighting modules 13,14,15 of each lighting device 2,3 are designed and/or arranged within the respective housing body 9, i.e. are configured, so as to generate on the test screen, when they are switched on, respective individual light projections, at it will be indicated in greater details herein below, which are arranged at least in part offset to one another in a vertical direction.

In particular, the main lighting module 12 and the secondary lighting modules 13-15 of each lighting device 2,3 are configured to generate each, when switched on, an individual light projection on the test screen, the sum of the individual light projections of the modules 12-15 of each lighting device 2,3 forming the overall light projection 7,8 generated by each lighting device 2,3.

As it is schematically shown in figure 1 by differently hatched areas, the overall light projection 7 is formed by the superimposition (partial or total) to an individual light projection 20 generated by the switching on of the main lighting module 12 of the lighting device 2 of individual light projections 21,22,23 generated by the switching on of the secondary lighting modules 13-15 of the lighting device 2; the light projections 21-23, in the configuration shown in figure 1, are totally superimposed to the light projection 20 and are arranged vertically offset to one another to such an extent that the projections 21 and 22 are not superimposed to each other in the vertical direction (so they are completely offset to each other), while projection 23 is partially superimposed to projection 22 in the vertical direction (so it is only partially offset to projection 22).

Likewise, the overall light projection 8 is formed by the superimposition (partial or total) to an individual light projection 24 generated by the switching on of the main lighting module 12 of the lighting device 3, and of individual light projections 25,26,27 generated by the switching on of the secondary lighting modules 13-15 of the lighting device 3; the lighting devices 2,3 are moreover configured such that the overall light projection 7 is superimposed to overall light projection 8.

Superimposition of different light projections generated by different lighting modules increases, proportionally with the number of superimposed light projections, the illumination intensity in the superimposition area.

In combination with the above, each of the secondary lighting modules 13-15 of each lighting device 2,3 are rotatable around the respective first axes independently of one another and are further rotatable, all together or at least one (e.g. lighting module 15) independently of the others (e.g. modules 13,14), around a second axis D (figure 7) arranged substantially perpendicular to the first axes A,B,C. The second axis D may be one in common for all the lighting modules 13-15, or each module 13,14,15 may have its own axis D perpendicular to the respective axis A,B,C, the axed D of all the modules 13-15 being parallel to one another.

According to the invention, the control unit 19 is moreover designed to selectively rotate the secondary lighting modules 13-15 of the same or different angles around the first axes A,B,C and around the second axis D (figure 7) and to switch on/off the secondary lighting modules 13-15 of each lighting device 2,3 independently of the switching on/off of the main lighting module 12 of each and the same lighting device 2,3.

As it may be seen from figure 1, the at least two secondary lighting modules (three in the embodiment shown) 13-15 of each lighting device 2,3 are, according to one possible embodiment of the invention, arranged within the housing body 9 offset to one another in the direction of the first axes A,B,C, so as to obtain, when they are lighted on, the described offset in the light projections 21-23 and 25-27; of course, as it should be clear for the skilled person, the same feature of the offset in the light projections generated by the secondary lighting modules can be obtained in other manners, e.g. by means of lenses and/or by suitably shaping the reflectors 17.

The secondary lighting modules 13-15 are arranged side by side and on one side of the respective main lighting module 12 opposite to a first lateral end 28 of the respective housing body 9 designed to be mounted at the outboard side of the vehicle 4; the very same lateral end 28 of the housing body of each lighting device 2,3 is moreover shaped to receive the main lighting module 12.

A first of the secondary lighting modules 13-15 of each lighting device 2,3, namely module 15 also shown in details in figure 7, is arranged at a second lateral end 29 of the respective lighting device 2,3 opposite to the first lateral end 28.

Module 15 is designed to generate on the test screen, when it is switched on, a first individual light projection (indicated as 23 for lighting device 2 and as 27 for lighting device 3) which is arranged upwards in relation to the other individual light projections 21,22 (for projection 23 of lighting device 2) and 25,26 (for projection 27 of lighting device 3) generated on the test screen by the other secondary lighting modules 13,14.

According to an aspect of the present invention, the light projections 23 and 27 are less wide in horizontal direction than the respective individual light projections 21,22 and 25,26 generated on the test screen by the other secondary lighting modules 13,14.

According to a further aspect of the invention, the secondary lighting module 15 of each lighting device 2,3 is provided with a light beam conformation device 30 which is illustrated only in a schematic manner in figure 7 and comprises an active element 31 constituted e.g. either by a blind screen or a light conformation lens, and an actuator 32 to selectively move the blind screen or the conformation lens 31 to intercept, at least in part, a light beam (light beam 6c in figure 7) generated by the first secondary lighting module 15.

The light beam conformation device 30 is designed to modify an aspect ratio of the individual light projection formed on the test screen by the light beam generated by the first secondary lighting module 15 when it is switched on, namely of projections 23 generated by module 15 of lighting device 2 and of projection 27 generated by module 15 of lighting device 3. Here and below, for "aspect ratio" it is intended the ratio between the width and the height of each light projection 23,27.

The control unit 19 is designed to rotate the secondary lighting modules 13-15 of each lighting device 2,3 around the first axes A,B,C to assume a first position (shown in figure 1) in which modules 13-15 are oriented substantially parallel to the main lighting module 12 of the respective lighting device 2,3 and wherein the individual light projections 21-23 generated on the test screen by the secondary lighting modules 13-15 of one lighting device, in the example shown of lighting device 2, are at least partially superimposed in the horizontal direction with the corresponding individual light projections 25-27 generated on the same test screen by the secondary lighting modules 13-15 of the other lighting device, in the example shown of lighting device 3.

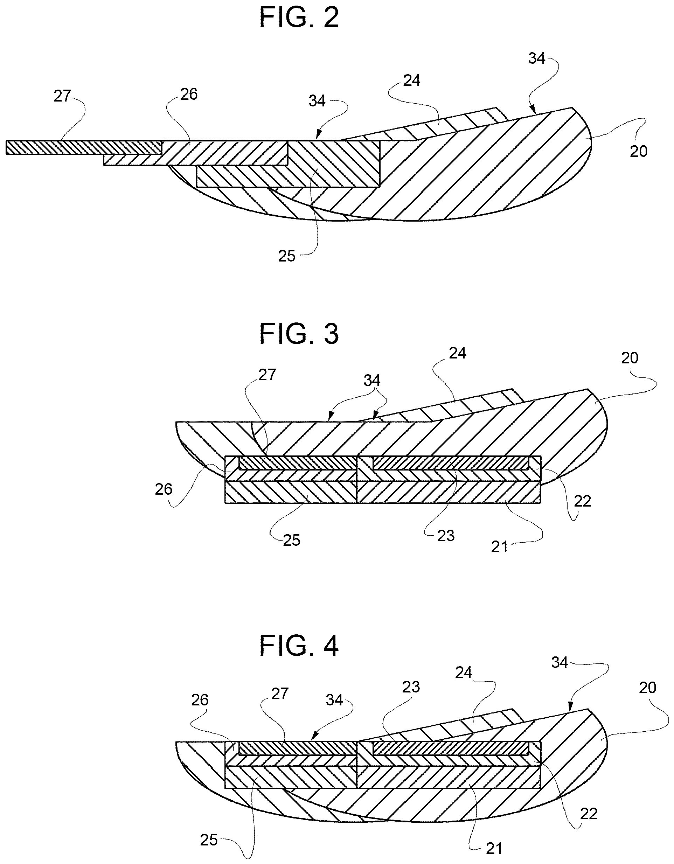

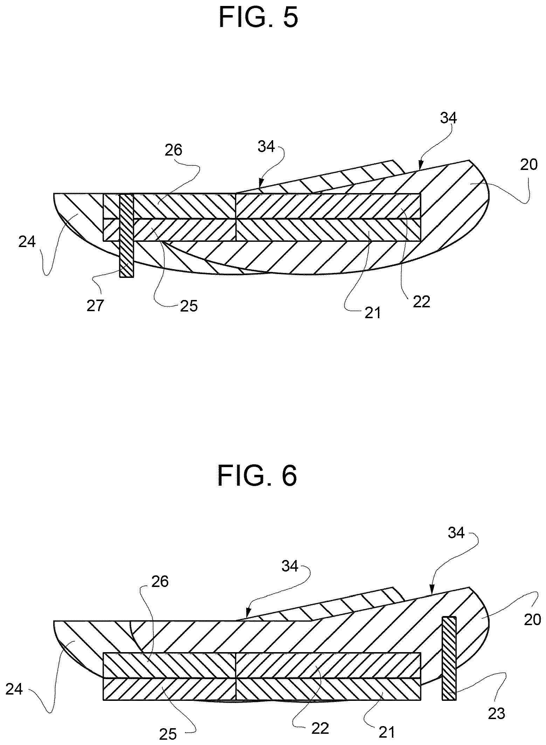

The control unit is further designed and configured to rotate the secondary lighting modules 13-15 of both the lighting devices 2,3 around the second axis D to such an extent to arrange selectively the individual light projections 21-23 and 25-27 generated by the secondary lighting modules 13-15 of both the lighting devices 2,3, when they are switched on and are in the first position:
- at a cut-of line 34 (figures 1 and 4) of the respective individual light projections 20,24 generated by the main lighting modules 12;
- below the cut-off line 34 (figures 3 and 6).

The control unit 19 is also designed to rotate the secondary lighting modules 13-15 of each lighting device 2,3 around the first axes A,B,C to assume a second position (not shown for sake of simplicity) in which they are oriented substantially at an angle with the main lighting module 12 of the respective lighting device 2,3 and wherein the individual light projections, e.g. projections 21-23, generated on the test screen by the secondary lighting modules of one lighting device, e.g. the modules 13-15 of the lighting device 2, are substantially not superimposed in the horizontal direction with the corresponding individual light projections 25-27 generated on the same test screen by the secondary lighting modules 13-15 of the other lighting device 3, but are on the contrary arranged side by side therewith, as shown in figures 3 and 4.

As already described, the control unit 19 is also designed to rotate the secondary lighting modules 13-15 of both the lighting devices 2,3 around the second axis D to such an extent to arrange selectively the individual light projections 21-23 and 25-27 generated by the secondary lighting modules 13-15 of both the lighting devices 2,3, when they are switched on and are in the second position, either at a cut-of line 34 of the individual light projections 20,24 generated by the main lighting modules 12 or below the cut-off line 34. When such a movement is carried out simultaneously with the movement bringing the secondary lighting modules in the afore mentioned second position the result is that one as shown in figure 4 and 3 respectively, where the three vertically stacked (and e.g. at least partially superimposed) projections 21-23 and 25,27 may be arranged side by side either in an upward position (figure 4), at the cut-off line 34 or below the cut-off line 34, in a selected downward position (figure 3) .

When the modules 13-15 are in the second position and may be rotated to obtain the upward and downward positions of the light projections 21-23 and 25-27, the control unit 19 is designed to activate, under selected conditions, the light beam conformation device 30 associated with the secondary lighting module 15 of each lighting device 2,3 and configured to modify the aspect ratio of at least one or both the individual light projections 23,27 formed on the test screen by the light beam 6c generated by one or both the secondary lighting module 15 when they are switched on. The control unit 19 is also configured to selectively switching on only one of the lighting modules 15, while the other is maintained switched off, in order to generate selectively only one of the two light projections 23,27 (figures 5,6).

Finally, the control unit 19 is designed, under selected conditions different form the former ones, to maintain switched off all the secondary lighting modules 13-15 of a first of said pair of lighting devices 2,3, e.g. those of the lighting device 2 in the example shown in figure 2, and to simultaneously rotate around the first axes the secondary lighting modules 13-15 of a second of said pair of lighting devices 2,3, e.g. those of the lighting device 3 in the example shown in figure 2, to assume a plurality of third positions (not shown) wherein they are oriented such as to form different angles with the corresponding main lighting module 12 of the same lighting device, on the side of the main lighting module 12 opposite to the first lateral end 28 of the housing body 9 immediately adjacent to the main lighting module 12. In this manner, in the example shown, the individual light projections 25,26,27 on the test screen are only partially superimposed to one another and only partially superimposed, or even fully shifted laterally, to the individual light projection 24 (in the example shown) of the corresponding main lighting module 12. The vice-versa is also possible, so as to maintain switched off the lighting modules 13-15 of the lighting device 3 and to switch on and rotate the lighting modules 13-15 of the lighting device 2.

The result of the above described commands of the central unit 19 is that the individual light projection 25-27 of each secondary lighting module 13-15 of the lighting device 3 may be shifted progressively farther away from the first lateral end 28 toward the outboard side of vehicle 4, e.g. to follow a right turn of vehicle 4, or the light projections 21-23 may be shifted progressively farther away in the opposite versus to follow a left turn of vehicle 4.

In both cases, the light projections of each of the secondary lighting modules are shifted progressively farther away in relation to the light projection of the secondary lighting module immediately adjacent thereto, as shown in figure 2 for the modules of the lighting device 3.

In other words, the upward light projections 23,27 are shifted in the respective outboard direction more than the light projections 22,26 and the latter more than the downward light projections 21,25.

From the above description it is clear that a plurality of even very different lighting patterns can be obtained easily with the same lighting system 1.

During the normal forward march along a motorway the configuration shown in figure 1 is selected, so there is a better illumination forward, just straight the vehicle 4.

During turns the configuration of figure 2 (or a specular configuration) is selected, in order to better illuminate the turn and with the advantage, with respect to the known adaptive lighting devices, that there is a better and more continuous illumination of the forward trajectory of the vehicle.

The configuration of figures 4 or 5 is selected for the forward march along city streets and that one of figures 3 or 6 for the forward march in bad-weather conditions.

All the above configurations of the obtainable light distribution are controlled and selected by the central unit 19, e.g. in function of selected inputs coming from suitable sensors, e.g. a rain (or humidity) sensor 36 and a turn sensor 35.

All the aims of the invention are therefore accomplished.

## Claims

1. A lighting system (1) for vehicles, comprising a pair of lighting devices (2,3) designed to be mounted at opposite outboard front sides of a vehicle (4), each said lighting devices comprising an housing body (9) having a front inlet opening arranged to face in use toward a forward driving direction of the vehicle, a main lighting module (12) and at least two secondary lighting modules (13,14,15) arranged inside the housing body facing the inlet opening, the main lighting module (12) being carried rigid and stationary by the respective housing body (9), while the at least two secondary lighting modules (13,14,15) being carried rotatable in relation to the housing body and to the main lighting module, each around a respective its own first axis (A,B,C), the first axes (A,B,C) being arranged parallel to each other and transverse to an horizontal plane in use; the pair of lighting devices (2,3) being designed to generate on a test screen placed in front of the lighting device, when they are switched on, respective overall light projections (7,8) which partially overlap in an horizontal direction; the lighting system further comprising a control unit (19) to switch on/off selectively the main lighting module (12) and the secondary lighting modules (13,14,15) of each lighting device (2,3); wherein
i)- the main lighting module (12) and the secondary lighting modules (13,14,15) of each lighting device are designed to generate each, when switched on, an individual light projection (20-27) on the test screen, the sum of the individual light projections of the modules of each lighting device forming the overall light projection (7,8) generated by each lighting device;
ii)- the at least two secondary lighting modules (13,14,15) of each lighting device are designed and/or arranged within the respective housing body (9) so as to generate on the test screen, when they are switched on, respective individual light projections (21-23,25-27) which are arranged at least in part offset to one another in a vertical direction; **characterized in that**,
iii)- each of the secondary lighting modules are rotatable around the respective its own first axis (A,B,C) independently of one another and are further rotatable, all together or at least one independently of the others, around a second axis (D) arranged substantially perpendicular to the first axes;
iv)- the control unit (19) being designed to selectively rotate the secondary lighting modules (13-15) of the same or different angles around the first axes and around the second axis and to switch on/off the secondary lighting modules of each lighting device independently of the switching on/off of the main lighting module (12) of each and the same lighting device (2,3).

2. A lighting system according to claim 1, **characterized in that** the at least two secondary lighting modules (13-15) of each lighting device are arranged within the housing body (9) offset to one another in the direction of the first axes (A,B,C).

3. A lighting system according to anyone of the preceding claims, **characterized in that** the secondary lighting modules (13-15) are arranged side by side and on one side of the respective main lighting module (12) opposite to a first lateral end (28) of the respective housing body designed to be mounted at the outboard side of a vehicle and receiving the main lighting module.

4. A lighting system according to claim 3, **characterized in that** a first (15) of the secondary lighting modules of each lighting device is arranged at a second lateral end (29) of the respective lighting device opposite to the first lateral end and is designed to generate on the test screen, when it is switched on, a first individual light projection (23,27) which is arranged upwards in relation to the individual light projections generated on the test screen by the other secondary lighting modules and which is less wide in horizontal direction than the individual light projections (21,22;25,26) generated on the test screen by the other secondary lighting modules.

5. A lighting system according to claim 3 or 4, **characterized in that** a first (15) of the secondary lighting modules of each lighting device (2,3) is arranged at a second lateral end (29) of the respective lighting device opposite to the first lateral end and is provided with a light beam conformation device (30) which comprises either a blind screen or a light conformation lens (31) and an actuator (32) to selectively move the blind screen or the conformation lens to intercept, at least in part, a light beam (5c;6c) generated by the first secondary lighting module; the light beam conformation device (30) being designed to modify an aspect ratio of a first individual light projection (23;27) formed on the test screen by the light beam generated by the first secondary lighting module when it is switched on.

6. A lighting system according to anyone of the preceding claims, **characterized in that** the control unit (19) is designed to rotate the secondary lighting modules (13-15) of each lighting device around the first axes to assume a first position in which they are oriented substantially parallel to the main lighting module (12) of the respective lighting device and wherein the individual light projections (21-23) generated on the test screen by the secondary lighting modules of one lighting device (2) are at least partially superimposed in the horizontal direction with the corresponding individual light projections (25-27) generated on the same test screen by the secondary lighting modules of the other lighting device (3); the control unit (19) being further designed to rotate the secondary lighting modules (13-15) of both the lighting devices around the second axis (D) to such an extent to arrange the individual light projections generated by the secondary lighting modules of both the lighting devices, when they are switched on and are in said first position, selectively at a cut-of line (34) of the individual light projections generated by the main lighting modules and below the cut-off line (34).

7. A lighting system according to anyone of the preceding claims, **characterized in that** the control unit (19) is designed to rotate the secondary lighting modules (13-15) of each lighting device around the first axes to assume a second position in which they are oriented substantially at an angle with the main lighting module (12) of the respective lighting device and wherein the individual light projections (21-23) generated on the test screen by the secondary lighting modules of one lighting device are substantially not superimposed in the horizontal direction with the corresponding individual light projections (25-27) generated on the same test screen by the secondary lighting modules of the other lighting device, but are arranged side by side therewith; the control unit (19)being further designed to rotate the secondary lighting modules of both the lighting devices (2,3) around the second axis to such an extent to arrange the individual light projections generated by the secondary lighting modules of both the lighting devices, when they are switched on and are in said second position, selectively at a cut-of line (34) of the individual light projections generated by the main lighting modules and below the cut-off line (34).

8. A lighting system according to claim 7, **characterized in that** the control unit (19) is designed to activate a light beam conformation device (30) associated with a first (15) secondary lighting module of each lighting device and configured to modify an aspect ratio of a first individual light projection (21,25) formed on the test screen by a light beam generated by the first secondary lighting module when it is switched on.

9. A lighting system according to anyone of the preceding claims, **characterized in that** the control unit (19) is designed to maintain switched off the secondary lighting modules (13-15) of a first of said pair of lighting devices (2,3) and to simultaneously rotate the secondary lighting modules (13-15) of a second of said pair of lighting devices (2,3) around the first axes to assume a plurality of third positions wherein they are oriented such as to form different angles with the corresponding main lighting module (12) on the side of the main lighting module opposite to a first lateral end (28) of the housing body immediately adjacent to the main lighting module (12), so as that their individual light projections () on said test screen are only partially superimposed to one another and to the individual light projection (20,24) of the corresponding main lighting module, the individual light projection (21-23;25-27) of each secondary lighting module being shifted progressively farther away from the first lateral end (28) of the housing body in relation to the individual light projection of the secondary lighting module immediately adjacent thereto on the side of the main lighting module (12).

10. Vehicle (4) provided with a lighting system (1) according to anyone of the preceding claims.

## Patentansprüche

1. Beleuchtungssystem (1) für Fahrzeuge, das ein Paar von Beleuchtungsvorrichtungen (2, 3) umfasst, die dazu ausgelegt sind, an gegenüberliegenden äußeren Stirnseiten eines Fahrzeugs (4) angebracht zu werden, wobei jede der Beleuchtungsvorrichtungen einen Gehäusekörper (9) mit einer vorderen Einlassöffnung, die so angeordnet ist, dass sie im Gebrauch in eine Vorwärtsfahrtrichtung des Fahrzeugs gerichtet ist, ein Hauptbeleuchtungsmodul (12) und wenigstens zwei sekundäre Beleuchtungsmodule (13, 14, 15) umfasst, die innerhalb des Gehäusekörpers der Einlassöffnung zugewandt angeordnet sind, wobei das Hauptbeleuchtungsmodul (12) starr und stationär von dem jeweiligen Gehäusekörper (9) unterstützt ist, während die wenigstens zwei sekundären Beleuchtungsmodule (13, 14, 15) bezüglich des Gehäusekörpers und des Hauptbeleuchtungsmoduls um jeweils eine eigene erste Achse (A, B, C) drehbar unterstützt sind, wobei die ersten Achsen (A, B, C) im Gebrauch parallel zueinander und quer zu einer horizontalen Ebene angeordnet sind; wobei das Paar von Beleuchtungsvorrichtungen (2, 3) dazu ausgelegt ist, wenn es eingeschaltet ist, auf einem vor der Beleuchtungsvorrichtung angeordneten Testschirm entsprechende Gesamtlichtprojektionen (7, 8) zu erzeugen, die sich in einer horizontalen Richtung teilweise überlappen; wobei das Beleuchtungssystem ferner eine Steuereinheit (19) zum selektiven Ein-/Ausschalten des Hauptbeleuchtungsmoduls (12) und der sekundären Beleuchtungsmodule (13, 14, 15) jeder Beleuchtungsvorrichtung (2, 3) umfasst, wobei
i) - das Hauptbeleuchtungsmodul (12) und die sekundären Beleuchtungsmodule (13, 14, 15) jeder Beleuchtungsvorrichtung dazu ausgelegt sind, wenn sie eingeschaltet sind, auf dem Testschirm jeweils eine individuelle Lichtprojektion (20-27) zu erzeugen, wobei die Summe der individuellen Lichtprojektionen der Module jeder Beleuchtungsvorrichtung die von der jeweiligen Beleuchtungsvorrichtung erzeugte Gesamtlichtprojektion (7, 8) bildet;
ii) - die wenigstens zwei sekundären Beleuchtungsmodule (13, 14, 15) jeder Beleuchtungsvorrichtung so ausgelegt und/oder innerhalb des jeweiligen Gehäusekörpers (9) angeordnet sind, dass sie, wenn sie eingeschaltet sind, auf dem Testschirm jeweils individuelle Lichtprojektionen (21-23, 25-27) erzeugen, die zumindest teilweise in einer vertikalen Richtung zueinander versetzt angeordnet sind;
**dadurch gekennzeichnet, dass**
iii) - alle sekundären Beleuchtungsmodule unabhängig voneinander um die jeweils eigene erste Achse (A, B, C) drehbar sind und ferner alle zusammen oder wenigstens eines unabhängig von den anderen um eine zweite Achse (D), die im Wesentlichen senkrecht zu den ersten Achsen angeordnet ist, drehbar sind/ist;
iv) - die Steuereinheit (19) dazu ausgelegt ist, selektiv die sekundären Beleuchtungsmodule (13-15) mit gleichen oder unterschiedlichen Winkeln um die ersten Achsen und um die zweite Achse zu drehen und die sekundären Beleuchtungsmodule jeder Beleuchtungsvorrichtung unabhängig von dem Ein-/Ausschalten des Hauptbeleuchtungsmoduls (12) jeweils derselben Beleuchtungsvorrichtung (2, 3) einzuschalten und auszuschalten.

2. Beleuchtungssystem nach Anspruch 1, **dadurch gekennzeichnet, dass** die wenigstens zwei sekundären Beleuchtungsmodule (13-15) jeder Beleuchtungsvorrichtung innerhalb des Gehäusekörpers (9) in Richtung der ersten Achsen (A, B, C) zueinander versetzt angeordnet sind.

3. Beleuchtungssystem nach einem der vorangehenden Ansprüche, **dadurch gekennzeichnet, dass** die sekundären Beleuchtungsmodule (13-15) nebeneinander und auf einer Seite des jeweiligen Hauptbeleuchtungsmoduls (12) gegenüber einem ersten seitlichen Ende (28) des jeweiligen Gehäusekörpers angeordnet sind, das dazu ausgelegt ist, an der Außenseite eines Fahrzeugs angebracht zu werden, und das Hauptbeleuchtungsmodul aufnimmt.

4. Beleuchtungssystem nach Anspruch 3, **dadurch gekennzeichnet, dass** ein erstes (15) der sekundären Beleuchtungsmodule jeder Beleuchtungsvorrichtung an einem zweiten seitlichen Ende (29) der jeweiligen Beleuchtungsvorrichtung gegenüber dem ersten seitlichen Ende angeordnet ist und dazu ausgelegt ist, wenn es eingeschaltet ist, auf dem Testschirm eine erste individuelle Lichtprojektion (23, 27) zu erzeugen, die in Bezug auf die individuellen Lichtprojektionen, die von den anderen sekundären Beleuchtungsmodulen auf dem Testschirm erzeugt werden, oben angeordnet ist und in horizontaler Richtung weniger breit ist als die individuellen Lichtprojektionen (21, 22; 25, 26), die von den anderen sekundären Beleuchtungsmodulen auf dem Testschirm erzeugt werden.

5. Beleuchtungssystem nach Anspruch 3 oder 4, **dadurch gekennzeichnet, dass** ein erstes (15) der sekundären Beleuchtungsmodule jeder Beleuchtungsvorrichtung (2, 3) an einem zweiten seitlichen Ende (29) der jeweiligen Beleuchtungsvorrichtung gegenüber dem ersten seitlichen Ende angeordnet ist und mit einer Lichtstrahlanpassungsvorrichtung (30) versehen ist, die entweder einen Blindschirm oder eine Lichtanpassungslinse (31) und einen Aktuator (32) umfasst, um den Blindschirm oder die Anpassungslinse selektiv zu bewegen, um einen Lichtstrahl (5c; 6c), der von dem ersten sekundären Beleuchtungsmodul erzeugt wird, zumindest teilweise abzufangen; wobei die Lichtstrahlanpassungsvorrichtung (30) dazu ausgelegt ist, ein Seitenverhältnis einer ersten individuellen Lichtprojektion (23; 27) zu modifizieren, die auf dem Testschirm durch den Lichtstrahl gebildet wird, der von dem ersten sekundären Beleuchtungsmodul erzeugt wird, wenn dieses eingeschaltet wird.

6. Beleuchtungssystem nach einem der vorangehenden Ansprüche, **dadurch gekennzeichnet, dass** die Steuereinheit (19) dazu ausgelegt ist, die sekundären Beleuchtungsmodule (13-15) jeder Beleuchtungsvorrichtung um die ersten Achsen zu drehen, um eine erste Position einzunehmen, in der sie im Wesentlichen parallel zu dem Hauptbeleuchtungsmodul (12) der jeweiligen Beleuchtungsvorrichtung ausgerichtet sind, und wobei die individuellen Lichtprojektionen (21-23), die auf dem Testschirm durch die sekundären Beleuchtungsmodule der einen Beleuchtungsvorrichtung (2) erzeugt werden, zumindest teilweise in horizontaler Richtung mit den entsprechenden individuellen Lichtprojektionen (25-27) überlagert sind, die auf demselben Testschirm durch die sekundären Beleuchtungsmodule der anderen Beleuchtungsvorrichtung (3) erzeugt werden; wobei die Steuereinheit (19) ferner dazu ausgelegt ist, die sekundären Beleuchtungsmodule (13-15) beider Beleuchtungsvorrichtungen um die zweite Achse (D) so weit zu drehen, dass die individuellen Lichtprojektionen, die von den sekundären Beleuchtungsmodulen beider Beleuchtungsvorrichtungen erzeugt werden, wenn diese eingeschaltet sind und sich in der ersten Position befinden, selektiv an einer Abschneidelinie (34) der individuellen Lichtprojektionen, die von den Hauptbeleuchtungsmodulen erzeugt werden, und unterhalb der Abschneidelinie (34) angeordnet sind.

7. Beleuchtungssystem nach einem der vorangehenden Ansprüche, **dadurch gekennzeichnet, dass** die Steuereinheit (19) dazu ausgelegt ist, die sekundären Beleuchtungsmodule (13-15) jeder Beleuchtungsvorrichtung um die ersten Achsen zu drehen, um eine zweite Position einzunehmen, in der sie im Wesentlichen in einem Winkel zu dem Hauptbeleuchtungsmodul (12) der jeweiligen Beleuchtungsvorrichtung ausgerichtet sind, und wobei die individuellen Lichtprojektionen (21-23), die auf dem Testschirm durch die sekundären Beleuchtungsmodule der einen Beleuchtungsvorrichtung erzeugt werden, in horizontaler Richtung im Wesentlichen nicht mit den entsprechenden individuellen Lichtprojektionen (25-27), die auf demselben Testschirm durch die sekundären Beleuchtungsmodule der anderen Beleuchtungsvorrichtung erzeugt werden, überlagert sind, sondern mit diesen nebeneinander angeordnet sind; wobei die Steuereinheit (19) ferner dazu ausgelegt ist, die sekundären Beleuchtungsmodule beider Beleuchtungsvorrichtungen (2, 3) um die zweite Achse so weit zu drehen, dass die individuellen Lichtprojektionen, die von den sekundären Beleuchtungsmodulen beider Beleuchtungsvorrichtungen erzeugt werden, wenn diese eingeschaltet sind und sich in der zweiten Position befinden, selektiv an einer Abschneidelinie (34) der individuellen Lichtprojektionen, die von den Hauptbeleuchtungsmodulen erzeugt werden, und unterhalb der Abschneidelinie (34) angeordnet sind.

8. Beleuchtungssystem nach Anspruch 7, **dadurch gekennzeichnet, dass** die Steuereinheit (19) dazu ausgelegt ist, eine Lichtstrahlanpassungsvorrichtung (30) zu aktivieren, die einem ersten (15) sekundären Beleuchtungsmodul jeder Beleuchtungsvorrichtung zugeordnet und dazu konfiguriert ist, ein Seitenverhältnis einer ersten individuellen Lichtprojektion (21, 25) zu modifizieren, die auf dem Testschirm durch einen Lichtstrahl gebildet wird, der von dem ersten sekundären Beleuchtungsmodul erzeugt wird, wenn dieses eingeschaltet ist.

9. Beleuchtungssystem nach einem der vorangehenden Ansprüche, **dadurch gekennzeichnet, dass** die Steuereinheit (19) dazu ausgelegt ist, die sekundären Beleuchtungsmodule (13-15) einer ersten des Paars von Beleuchtungsvorrichtungen (2, 3) ausgeschaltet zu halten und gleichzeitig die sekundären Beleuchtungsmodule (13-15) einer zweiten des Paars von Beleuchtungsvorrichtungen (2, 3) um die ersten Achsen zu drehen, um eine mehrere dritte Positionen einzunehmen, in denen sie so ausgerichtet sind, dass sie mit dem entsprechenden Hauptbeleuchtungsmodul (12) auf der Seite des Hauptbeleuchtungsmoduls, die einem ersten seitlichen Ende (28) des Gehäusekörpers, das unmittelbar an das Hauptbeleuchtungsmodul (12) angrenzt, gegenüberliegt, unterschiedliche Winkel bilden, so dass ihre individuellen Lichtprojektionen auf dem Testschirm nur teilweise miteinander und mit der individuellen Lichtprojektion (20, 24) des entsprechenden Hauptbeleuchtungsmoduls überlagert sind, wobei die individuellen Lichtprojektionen (21-23; 25-27) jedes sekundären Beleuchtungsmoduls in Bezug auf die individuelle Lichtprojektion des sekundären Beleuchtungsmoduls, das auf der Seite des Hauptbeleuchtungsmoduls (12) unmittelbar benachbart ist, zunehmend weiter von dem ersten seitlichen Ende (28) des Gehäusekörpers weg verschoben werden.

10. Fahrzeug (4), das mit einem Beleuchtungssystem (1) nach einem der vorangehende Ansprüche versehen ist.

## Revendications

1. Système d'éclairage (1) pour véhicules, comprenant une paire de dispositifs d'éclairage (2, 3) conçus pour être montés à des côtés avant extérieurs opposés d'un véhicule (4), chaque dit dispositif d'éclairage comprenant un corps de logement (9) ayant une ouverture d'entrée avant agencée pour faire face, en utilisation, dans un sens de conduite en marche avant du véhicule, un module d'éclairage principal (12) et au moins deux modules d'éclairage secondaires (13, 14, 15) agencés à l'intérieur du corps de logement faisant face à l'ouverture d'entrée, le module d'éclairage principal (12) étant porté de manière rigide et immobile par le corps de logement (9) respectif et les au moins deux modules d'éclairage secondaires (13, 14, 15) étant portés de manière à pouvoir tourner par rapport au corps de logement et au module d'éclairage principal, chacun autour de son propre premier axe (A, B, C) respectif, les premiers axes (A, B, C) étant agencés parallèlement l'un à l'autre et transversalement à un plan horizontal en utilisation ; la paire de dispositifs d'éclairage (2, 3) étant conçus pour générer, sur un écran d'essai placé devant le dispositif d'éclairage, lorsqu'ils sont activés, des projections lumineuses globales (7, 8) respectives qui se chevauchent partiellement dans un sens horizontal ; le système d'éclairage comprenant en outre une unité de commande (19) pour activer/désactiver sélectivement le module d'éclairage principal (12) et les modules d'éclairage secondaires (13, 14, 15) de chaque dispositif d'éclairage (2, 3) ; dans lequel
i)- le module d'éclairage principal (12) et les modules d'éclairage secondaires (13, 14, 15) de chaque dispositif d'éclairage sont conçus pour que chacun d'eux génère, lorsqu'il est activé, une projection lumineuse individuelle (20-27) sur l'écran d'essai, la somme des projections lumineuses individuelles des modules de chaque dispositif d'éclairage formant la projection lumineuse globale (7, 8) générée par chaque dispositif d'éclairage ;
ii)- les au moins deux modules d'éclairage secondaires (13, 14, 15) de chaque dispositif d'éclairage sont conçus et/ou agencés à l'intérieur du corps de logement (9) respectif de manière à générer, sur l'écran d'essai, lorsqu'ils sont activés, des projections lumineuses individuelles (21-23, 25-27) respectives qui sont agencées au moins en partie décalées l'une par rapport à l'autre dans un sens vertical ; **caractérisé en ce que**
iii)- chacun des modules d'éclairage secondaires est rotatif autour de son propre premier axe (A, B, C) respectif indépendamment l'un de l'autre et ils sont en outre rotatifs, solidairement ou au moins l'un indépendamment des autres, autour d'un second axe (D) agencé sensiblement perpendiculairement aux premiers axes ;
iv)- l'unité de commande (19) étant conçue pour faire tourner sélectivement les modules d'éclairage secondaires (13-15) d'un angle identique ou différent autour des premiers axes et autour du second axe et pour activer/désactiver les modules d'éclairage secondaires de chaque dispositif d'éclairage indépendamment de l'activation/désactivation du module d'éclairage principal (12) du même dispositif d'éclairage (2, 3).

2. Système d'éclairage selon la revendication 1, **caractérisé en ce que** les au moins deux modules d'éclairage secondaires (13-15) de chaque dispositif d'éclairage sont agencés à l'intérieur du corps de logement (9) décalés l'un par rapport à l'autre dans le sens des premiers axes (A, B, C).

3. Système d'éclairage selon l'une quelconque des revendications précédentes, **caractérisé en ce que** les modules d'éclairage secondaires (13-15) sont agencés côte à côte sur un côté du module d'éclairage principal (12) respectif à l'opposé d'une première extrémité latérale (28) du corps de logement respectif conçu pour être monté sur le côté extérieur d'un véhicule et recevant le module d'éclairage principal.

4. Système d'éclairage selon la revendication 3, **caractérisé en ce qu'**un premier (15) des modules d'éclairage secondaires de chaque dispositif d'éclairage est agencé à une seconde extrémité latérale (29) du dispositif d'éclairage respectif à l'opposé de la première extrémité latérale et est conçu pour générer, sur l'écran d'essai, lorsqu'il est activé, une première projection lumineuse individuelle (23, 27) qui est agencée vers le haut par rapport aux premières projections lumineuses individuelles générées sur l'écran d'essai par les autres modules d'éclairage secondaires et qui est moins large dans un sens horizontal que les projections lumineuses individuelles (21, 22 ; 25, 26) générées sur l'écran d'essai par les autres modules d'éclairage secondaires.

5. Système d'éclairage selon la revendication 3 ou 4, **caractérisé en ce qu'**un premier (15) des modules d'éclairage secondaires de chaque dispositif d'éclairage (2, 3) est agencé à une seconde extrémité latérale (29) du dispositif d'éclairage respectif à l'opposé de la première extrémité latérale et est pourvu d'un dispositif de conformation de faisceau lumineux (30) qui comprend soit un écran pare-soleil soit une lentille de conformation lumineuse (31) et un actionneur (32) pour déplacer sélectivement l'écran pare-soleil ou la lentille de conformation pour intercepter, au moins en partie, un faisceau lumineux (5c ; 6c) généré par le premier module d'éclairage secondaire ; le dispositif de conformation de faisceau lumineux (30) étant conçu pour modifier un rapport hauteur/largeur d'une première projection lumineuse individuelle (23 ; 27) formée sur l'écran d'essai par le faisceau lumineux généré par le premier module d'éclairage secondaire lorsqu'il est activé.

6. Système d'éclairage selon l'une quelconque des revendications précédentes, **caractérisé en ce que** l'unité de commande (19) est conçue pour faire tourner les modules d'éclairage secondaires (13-15) de chaque dispositif d'éclairage autour des premiers axes pour qu'ils prennent une première position à laquelle ils sont orientés sensiblement parallèlement au module d'éclairage principal (12) du dispositif d'éclairage respectif et dans lequel les projections lumineuses individuelles (21-23) générées sur l'écran d'essai par les modules d'éclairage secondaires d'un dispositif d'éclairage (2) sont au moins partiellement superposées dans le sens horizontal avec les projections lumineuses individuelles (25-27) correspondantes générées sur le même écran d'essai par les modules d'éclairage secondaires de l'autre dispositif d'éclairage (3) ; l'unité de commande (19) étant en outre conçue pour faire tourner les modules d'éclairage secondaires (13-15) des deux dispositifs d'éclairage autour du second axe (D) de manière à agencer les projections lumineuses individuelles générées par les modules d'éclairage secondaires des deux dispositifs d'éclairage, lorsqu'ils sont activés et sont à ladite première position, sélectivement à une ligne de coupure (34) des projections lumineuses individuelles générées par les modules d'éclairage principaux et au-dessous de la ligne de coupure (34).

7. Système d'éclairage selon l'une quelconque des revendications précédentes, **caractérisé en ce que** l'unité de commande (19) est conçue pour faire tourner les modules d'éclairage secondaires (13-15) de chaque dispositif d'éclairage autour des premiers axes pour qu'ils prennent une deuxième position à laquelle ils sont orientés sensiblement à un angle par rapport au module d'éclairage principal (12) du dispositif d'éclairage respectif et dans lequel les projections lumineuses individuelles (21-23) générées sur l'écran d'essai par les modules d'éclairage secondaires du dispositif d'éclairage ne sont sensiblement pas superposées dans le sens horizontal avec les projections lumineuses individuelles (25-27) correspondantes générées sur le même écran d'essai par les modules d'éclairage secondaires de l'autre dispositif d'éclairage, mais sont agencées côte à côte avec celles-ci ; l'unité de commande (19) étant en outre conçue pour faire tourner les modules d'éclairage secondaires des deux dispositifs d'éclairage (2, 3) autour du second axe de manière à agencer les projections lumineuses individuelles générées par les modules d'éclairage secondaires des deux dispositifs d'éclairage, lorsqu'ils sont activés et sont à ladite deuxième position, sélectivement à une ligne de coupure (34) des projections lumineuses individuelles générées par les modules d'éclairage principaux et au-dessous de la ligne de coupure (34).

8. Système d'éclairage selon la revendication 7, **caractérisé en ce que** l'unité de commande (19) est conçue pour actionner un dispositif de conformation de faisceau lumineux (30) associé à un premier module d'éclairage secondaire (15) de chaque dispositif d'éclairage et configuré pour modifier un rapport longueur/largeur d'une première projection lumineuse individuelle (21, 25) formée sur l'écran d'essai par un faisceau lumineux généré par le premier module d'éclairage secondaire lorsqu'il est activé.

9. Système d'éclairage selon l'une quelconque des revendications précédentes, **caractérisé en ce que** l'unité de commande (19) est conçue pour maintenir les modules d'éclairage secondaires (13-15) d'un premier de ladite paire de dispositifs d'éclairage (2, 3) désactivés et pour faire tourner simultanément les modules d'éclairage secondaires (13-15) d'un second de ladite paire de dispositifs d'éclairage (2, 3) autour des premiers axes pour qu'ils prennent une pluralité de troisièmes positions auxquelles ils sont orientés afin de former différents angles par rapport au module d'éclairage principal (12) correspondant sur le côté du module d'éclairage principal à l'opposé d'une première extrémité latérale (28) du corps de logement immédiatement adjacente au module d'éclairage principal (12), de sorte que leurs projections lumineuses individuelles () sur ledit écran d'essai ne soient que partiellement superposées l'une sur l'autre et sur la projection lumineuse individuelle (20, 24) du module d'éclairage principal correspondant, la projection lumineuse individuelle (21-23 ; 25-27) de chaque module d'éclairage secondaire étant éloignée progressivement de la première extrémité latérale (28) du corps de logement par rapport à la projection lumineuse individuelle du module d'éclairage secondaire qui lui est immédiatement adjacent sur le côté du module d'éclairage principal (12).

10. Véhicule (4) pourvu d'un système d'éclairage (1) selon l'une quelconque des revendications précédentes.
